# EUROPEAN PATENT SPECIFICATION

(11) **EP 2 424 241 B1**
(45) Date of publication and mention of the grant of the patent: **30.03.2016**
(21) Application number: 10777327.7
(22) Date of filing: 30.04.2010
(51) Int. Cl.: H04N 7/24

(54) **METHOD, DEVICE AND SYSTEM FOR FORWARDING VIDEO DATA**
VERFAHREN, VORRICHTUNG UND SYSTEM ZUR WEITERLEITUNG VON VIDEODATEN
PROCÉDÉ, DISPOSITIF ET SYSTÈME DE TRANSMISSION DE DONNÉES VIDÉO

(30) Priority: 22.05.2009 CN 200910107617
(43) Date of publication of application: 29.02.2012
(73) Proprietor: Huawei Technologies Co., Ltd., Shenzhen, Guangdong 518129 (CN)
(72) Inventor: HU, Yinliang, Shenzhen Guangdong 518129 (CN); ZHENG, Hewen, Shenzhen Guangdong 518129 (CN); YAN, Xiaojun, Shenzhen Guangdong 518129 (CN); YU, Wenxiao, Shenzhen Guangdong 518129 (CN)
(74) Representative: Thun, Clemens
(86) International application number: PCT/CN2010/072350
(87) International publication number: WO 2010/133123

(56) References cited:
- EP-A1- 1 725 036
- EP-A1- 1 725 036
- WO-A2-2007/082165
- CN-A- 1 739 101
- CN-A- 1 964 310
- CN-A- 101 568 027
- US-A1- 2008 253 369
- US-A1- 2008 307 457
- US-A1- 2009 013 362
- WU F XIA R EVEN HUAWEI Q: "Proposal for an extension to RTCP for Retransmission Storm Suppression of RTP Stream; draft-wu-avt-retransmission-supression-rtp -00.txt", PROPOSAL FOR AN EXTENSION TO RTCP FOR RETRANSMISSION STORM SUPPRESSION OF RTP STREAM; DRAFT-WU-AVT-RETRANSMISSION-SUPRESSION-RTP -00.TXT, INTERNET ENGINEERING TASK FORCE, IETF; STANDARDWORKINGDRAFT, INTERNET SOCIETY (ISOC) 4, RUE DES FALAISES CH- 1205, 22 February 2010 (2010-02-22), pages 1-13, XP015066791, [retrieved on 2010-02-22]
- BEGEN CISCO SYSTEMS A: "RTP Payload Format for MPEG2-TS Preamble; draft-begen-avt-rtp-mpeg2ts-preamble-00.tx t", RTP PAYLOAD FORMAT FOR MPEG2-TS PREAMBLE; DRAFT-BEGEN-AVT-RTP-MPEG2TS-PREAMBLE-00.TX T, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 4 March 2009 (2009-03-04), XP015060422,
- JEFFREY KANG ET AL: "Adaptive Streaming of Combined Audio/Video Content over Wireless Networks", 1 January 2006 (2006-01-01), AUTONOMIC MANAGEMENT OF MOBILE MULTIMEDIA SERVICES LECTURE NOTES IN COMPUTER SCIENCE;;LNCS, SPRINGER, BERLIN, DE, PAGE(S) 13 - 24, XP019047345, ISBN: 978-3-540-47654-2 * section3.2, paragraph "IFD-Friendly RTP encapsulation" *

## Description

### FIELD OF THE INVENTION

The present invention relates to video communications technologies in network communications technologies, and in particular, to a method, an apparatus, and a system for forwarding video data.

### BACKGROUND OF THE INVENTION

An Internet Protocol Television (IPTV) is a new technology that uses a broadband cable television network, integrates multiple technologies such as the Internet, multimedia and communication, and is capable of providing a user with multiple interactive services including a digital television service. A linchpin of an IPTV system is a fast channel change. In an existing IPTV system, channel changing delay is long, which severely affects Quality of Experience (QoE) of a user. Multiple factors affect IPTV channel changing delay, including: time consumed for quitting a multicast group of an old channel, time consumed for joining a multicast group of a new channel, time consumed for filling a de-jitter buffer of a user terminal such as a Set Top Box (STB), time consumed for waiting for a decodable I frame of the new channel, and so on. The time consumed for waiting for an I frame of the new channel is an essential part to the delay.

Currently, MPEG-2 and H.264 coding standards are generally used for video compression in the IPTV system. A television picture is encoded into Group of Pictures (GOP) that includes an I frame, some P frames, and some B frames. The I frame is called an internal coding frame, also known as a key frame, and can be decoded and displayed independently; the P frame is called a forward prediction frame, and is generated as a result of prediction based on the P frame or I frame prior to the P frame, and cannot be decoded or displayed independently; the B frame is also known as a bidirectional interpolation frame, and is generated as a result of prediction based on a frame prior to the B frame and a frame next to the B frame, and cannot be decoded or displayed independently. Because the P frame and the B frame employ an inter-frame reference coding algorithm that does not need to encode a whole video picture, the P frame and the B frame provide higher coding efficiency than the I frame. In a broadcast television operation, to obtain a higher compression ratio, in an applied coding sequence, a gap between I frames is generally about 0.55 second. In this way, the quantity of the P frames or the B frames is much larger than the quantity of the I frames in a formed coding sequence. When a user changes a channel, the user encounters a P frame or a B frame in most cases. At this time, if a network device directly pushes a media stream to the user terminal (such as STB) starting from the P frame or B frame, the user terminal has to discard the received P frame or B frame and starts decoding only after a next I frame is received, because the P frame or the B frame can be decoded only based on a previous I frame.

To solve a problem of a long channel changing delay that is caused by waiting for the I frame, in the prior art, when receiving a channel changing request from the user, the network device obtains a media stream that starts from the I frame in a buffer, and quickly pushes the media stream to the user terminal, which reduces the delay of the user terminal waiting for the I frame and quickens the channel changing. The specific steps are as follows:
(1) The network device buffers a media stream corresponding to each IPTV channel in real time;
(2) At the time of changing a channel, the user terminal requests a media stream of the new channel from the network device;
(3) The network device quickly pushes, starting from the I frame, a buffered media stream of the new channel to the user terminal in a unicast mode;
(4) The user terminal starts to decode and play a video of the new channel after receiving a complete I frame;
(5) The user terminal requests for joining the multicast group corresponding to the new channel, and receives a real-time multicast media stream after joining the multicast group; and
(6) When discovering that a media stream obtained from the network device coincides with a real-time, multicast media stream, the user terminal stops obtaining a unicast media stream from the network device.

However, when the GOP of a live programming of IPTV is long (such as 4-8 seconds), that is, when the gap between the I frames is long, traffic of a burst media stream that needs to be quickly pushed by the network device is large when the user terminal requests channel changing. In an extreme circumstance, a buffered media stream of 1 - 7 seconds needs to be quickly pushed to the user terminal. In this case, as the amount of data of the burst stream is large, a high requirement is imposed on a buffer of the user terminal; a medium-end or low-end user terminal may lose a message due to buffer overflow, which affects picture quality; meanwhile, a high requirement is imposed on a transport bandwidth. Moreover, the push of the burst stream takes a long time; if the push is performed on a bandwidth-limited line, a packet loss caused by the long-time quick push consumes extra retransmission time and bandwidth, which increases a load on a server.

Moreover, with rapid development of a triple-play service, especially enrichment of a video service, a requirement on network bandwidth constantly increases, and the existing network bandwidth can hardly meet a user requirement. Therefore, network congestion occurs inevitably. When network congestion occurs, a random discard mechanism is generally applied in the prior art. When a buffer queue of the network device is fully occupied, a newly arrived data packet is discarded regardless of a priority of data that is transmitted. For the video service, if some important data is discarded randomly, a picture suffers problems such as a mosaic and a jitter, which severely affects the QoE of the user and is unacceptable to the user.

US 2008/0307457 A1 discloses a channel-switching method for switching from a first channel to a second channel. In order to allow a fast switch, a zapping channel is provided which is formed by selecting according to a regular interval frames from each channel and combining these frames to the zapping channel. In case of a channel switch, the user equipment reproduces the video data contained in the respective frames of the zapping channel until buffering of the data of the selected new channel is completed.

Further. EP 1 725 036 A1 refers to a method and a video server for embedding audiovisual packets in an IP packet to improve Quality of Service for Video over IP. A processor verifies the type of the audiovisual packet, associates a priority to the audiovisual packet according to its type, and embeds the audiovisual packet in the IP packet if the IP packet is empty or if the audiovisual packet has the same priority as the at least one audiovisual packet already in the IP packet. The processor may also close the IP packet and set a priority to the IP packet according to the priority of the audiovisual packets therein. The method is particularly useful for embedding MPEG-2 TS packets. Embodiments in EP 1725 036 A1 deal with particular priorities for different types of packets, such as giving the highest priority to either video or audio packets, but not both.

In conclusion, in a process of video transmission, it is necessary to selectively discard some video data without on the prerequisite that the QoE of the user is not affected, so as to reduce the changing delay, improve the transmission efficiency and relieve the network load.

### SUMMARY OF THE INVENTION

Embodiments of the present invention provide a method, an apparatus, and a system for forwarding video data to reduce a changing delay and relieve a network load in a process of transmitting a video.

According to one aspect of the present invention, a method for forwarding video data according to independent claim 1 is provided. The method comprises:
receiving and buffering at least two media streams corresponding to at least two channels, respectively which are encapsulated in IP messages according to MPEG-2 TS standard.
resolving the buffered media streams, obtaining Transport Stream, TS, packets in the media streams, and evaluating and identifying a visual sensitivity for each TS packet, wherein all non-video TS packets carrying audio and other control information are stipulated as having a high visual sensitivity and wherein for each video TS packet carrying a video said step comprises determining the visual sensitivity, wherein
evaluating a visual sensitivity of a video TS packet comprises:
   determining a Group of Pictures, GOP, that needs to be disassembled according to each video TS packet; inversely disassembling the GOP to extract each video frame in the GOP according to a frame reference relation, wherein the inversely disassembling the GOP to extract each video frame in the GOP according to the frame reference relation specifically comprises:
      disassembling the GOP to extract the video frames from a last video frame of a non-reference level to a reference level; after completion of extracting all video frames that are generated by referencing a video frame, extracting this referenced video frame; and continuing the disassembly until all video frames in the whole GOP are extracted;
      determining, after disassembling is completed, a visual sensitivity of each video frame from low to high according to a disassembling order of each video frame, wherein the disassembling order depends on the frame reference relation of the group of pictures, GOP; and
      evaluating and identifying a visual sensitivity of each video TS packet according to a visual sensitivity of each video frame, if a video TS packet comprises only one video frame, the visual sensitivity of the TS packet is the visual sensitivity of the video frame;
   if a video TS packet comprises multiple video frames, the visual sensitivity of the TS packet is the visual sensitivity of a video frame which has the highest visual sensitivity among the multiple video frames,
   receiving a fast channel change request that is sent by a user equipment for changing from a first channel to a second channel and in reaction thereto
   discarding a TS packet of low visual sensitivity, and re-encapsulating a TS packet of high visual sensitivity into a new media stream corresponding to the second channel; and
   sending IP messages containing the re-encapsulated new media stream to a user equipment,
   wherein before the obtaining the TS packets in the media stream, the method further comprises obtaining Program Specific Information, PSI, from the buffered media streams and storing the PSI.

According to another aspect of the present invention, an apparatus for forwarding video data according to independent claim 6 is provided. The apparatus comprises:
a receiving module, configured to receive at least two media streams corresponding to at least two channels, respectively, which are encapsulated in IP messages according to MPEG-2 TS standard;
a buffering module, configured to buffer the media streams received by the receiving module;
a first processing module, configured to resolve the media streams buffered by the buffering module, obtain Transport Stream, TS, packets in the media stream, and evaluate and identify a visual sensitivity of each TS packet,
wherein all non-video TS packets carrying audio and other control information are stipulated as having a high visual sensitivity and wherein for each video TS packet carrying a video the visual sensitivity is determined, wherein
   the first processing module comprises:
   a first submodule for evaluating a visual sensitivity of a video TS packet; wherein the first submodule specifically comprises:
      a GOP determining module, configured to determine a Group of Pictures, GOP, that needs to be disassembled in the media streams according to each video TS packet;
      a disassembling module, configured to inversely disassemble, according to a frame reference relation, the GOP determined by the GOP determining module to obtain each video frame in the GOP, wherein the inversely disassembling the GOP to extract each video frame in the GOP according to the frame reference relation specifically comprises:
         disassembling the GOP to extract the video frames from a last video frame of a non-reference level to a reference level; after completion of extracting all video frames that are generated by referencing a video frame, extracting this referenced video frame; and continuing the disassembly until all video frames in the whole GOP are extracted;
         a first priority determining module, configured to determine, after disassembling is completed, a visual sensitivity of each extracted video frame according to an order of extracting the video frames by the disassembling module; and
         a second priority determining module, configured to determine a visual sensitivity of a TS packet that encapsulates a video frame according to the visual sensitivity of each video frame determined by the first priority determining module, wherein the determining the visual sensitivity of the video TS packet comprises:
            if a video TS packet comprises only one video frame, the visual sensitivity of the TS packet is the visual sensitivity of the video frame;
            if a video TS packet comprises multiple video frames, the visual sensitivity of the TS packet is the visual sensitivity of a video frame which has the highest visual sensitivity among the multiple video frames;
a second processing module, configured to, according to the evaluation of the first processing module, discard a TS packet of low visual sensitivity and re-encapsulate a TS packet of high visual sensitivity into a new media stream; and
a first sending module, configured to send IP messages containing the re-encapsulated new media stream by the second processing module to a user equipment, further comprising:
   a third processing module, configured to resolve the media stream buffered by the buffering module, and obtain and store Program Specific Information, PSI, wherein: the receiving module is further configured to: receive a fast channel change request sent by the user equipment, and, according to the fast channel change request, trigger the second processing module to discard the TS packet of low visual sensitivity corresponding to a channel that is requested by the user equipment and re-encapsulate the TS packet of high visual sensitivity into a unicast burst stream corresponding to the channel that is requested by the user equipment; and
   the sending module is specifically configured to send the PSI to the user equipment before the unicast burst stream.

According to another aspect of the present invention, a system for forwarding video data is provided. The system includes at least the apparatus for forwarding video data.

Through implementation of the foregoing embodiments of the present invention, the network device discards a video TS packet of low visual sensitivity as required and re-encapsulates a TS packet of high visual sensitivity into a new media stream for transmitting, which reduces data traffic in the network and improves transmission efficiency on the prerequisite that QoE of a user is not affected.

### BRIEF DESCRIPTION OF THE DRAWINGS

To describe the technical solutions in the embodiments of the present invention or in the prior art more clearly, the following briefly describes the accompanying drawings involved in description of the embodiments. Apparently, the accompanying drawings are only some exemplary embodiments of the present invention, and persons of ordinary skill in the art can derive other drawings from these accompanying drawings without any creative effort.
FIG 1 is a schematic flowchart of a method for forwarding video data according to an example not forming part of the invention;
FIG 2 is a schematic flowchart of a method for forwarding video data according to an embodiment of the present invention;
FIG 3 is a schematic flowchart of a method for forwarding video data according to an example not forming part of die invention;
FIG. 4 is a schematic structural diagram of an apparatus for forwarding video data according to an embodiment of the present invention;
FIG. 5 is a schematic flowchart of a method for evaluating a visual sensitivity priority of a video frame according to an embodiment of the present invention; and
FIG. 6 is a schematic structural diagram of a frame in a GOP according to an embodiment of the present invention.

### DETAILED DESCRIPTION OF THE EMBODIMENTS

The embodiments of the present invention provide a method, an apparatus, and a system for forwarding video data, and are applied in the video transmission field to reduce data traffic in a network on the prerequisite that QoE of a user is not affected. As detailed implementation modes, the embodiments, of the present invention are applied in video transmission that is encapsulated by using an MPEG-2 TS standard.

PEG-2 TS is a standard that assembles a video stream, an audio stream and another basic data stream into one or multiple data streams suitable for storage or transmission. According to a difference in quality of transmission media, two different format specifications are defined in the MPEG-2: a TS and a Program Stream (PS). The TS differs from the PS in that a packet structure of the TS has a fixed length, but a packet structure of the PS has a variable length. Because the TS adopts a fixed-length packet structure, when synchronization information of a TS packet is damaged in the transmission, a receiving device may detect the synchronization information in a packet subsequent to this TS packet at a fixed location, and recover synchronization, which avoids an information loss. Moreover, because a fixed-length packet format is adopted, the TS provides sufficient flexibility for multiplexing of multiple channels of data, and features various merits such as dynamic bandwidth allocation, gradability, extensibility, and interference cancellation. Therefore, the TS is widely applied and becomes a universal standard in the media industry.

In a scenario of encapsulating a video stream based on MPEG-2 TS, as each IP message has 1500 bytes and each TS packet has only 188 bytes, each IP message is capable of carrying up to 7 TS packets. The 7 TS packets may include video packets of different load types (such as an I frame, a P frame, and a B frame), an audio packet, a Program Association Table (PAT), a Program Map Table (PMT), a filler packet, and so on. According to a load type of a TS packet, a transmission priority of the TS packet may be determined, and further, a transmission priority of an IP message may be determined. When the network device is congested or sends a unicast burst stream, selective discarding may be performed according to the priority of the IP message. However, when TS packets with different priorities are mixed in one IP message, the IP message cannot be discarded if a TS packet in the IP message has a high priority.

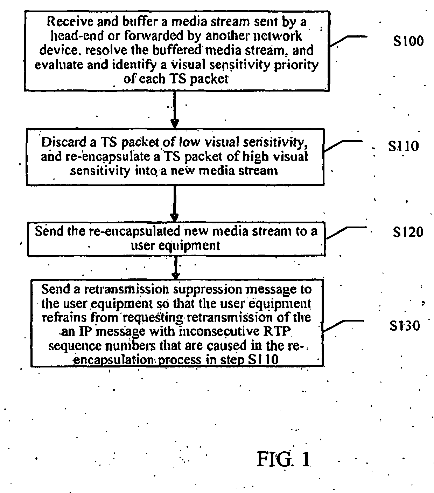

FIG. 1 is a schematic flowchart of a method for forwarding video data according to an example not forming part of the invention. The method includes the following steps:
S100: Receive and buffer a media stream sent by a head-end or forwarded by another network device. Resolve the buffered media stream, obtain TS packets in the media stream, and then evaluate and identify a visual sensitivity priority of each TS packet.

The media stream buffered in the foregoing process may be a multicast media stream or a unicast media stream.

It should be noted that in all TS packets of the media stream, both a TS packet that carries a video and a non-video TS packet that carries audio and other control information may be included. In this example, for ease of description, priorities of all TS packets are uniformly called visual sensitivity priorities, but it should be noted that all non-video TS packets are stipulated as having high visual sensitivity priorities and cannot be discarded. A video TS packet of high visual sensitivity has a high priority; and a video TS packet of low visual sensitivity has a low priority. Therefore, for brevity of description, in this application, for a video TS packet, high visual sensitivity is equivalent to a high visual sensitivity priority, and low visual sensitivity is equivalent to a low visual sensitivity priority. The high visual sensitivity and the low visual sensitivity in this application are relative concepts, and may be set or stipulated by a user according to a requirement on picture sharpness, a condition of network bandwidth occupation, and so on, which is not specified in this application.

S110: Discard a TS packet of low visual sensitivity in the buffered media stream to be sent, and re-encapsulate a TS packet of high visual sensitivity into a new media stream.

In this example, the video TS packet of low visual sensitivity may be discarded according to a set percentage, a network congestion state, a channel description, a configuration parameter, or a set priority. The TS packet of high visual sensitivity includes at least a video TS packet that encapsulates an internal coding frame, and cannot be discarded. In addition, in this example, a non-video TS packet may not be discarded.

In step S110, the new media stream may be a multicast media stream carried in the IP message, a unicast media stream of a channel, or a unicast burst stream of the channel (in the case of a fast channel change).

S120: Send the new media stream re-encapsulated in step S110 to a user equipment.

If the media stream buffered in step S100 is the media stream carried in the IP message, the process of re-ericapsulating the TS packet in step S110 may be: discarding the TS packet of low visual sensitivity after resolving the IP message, and re-encapsulating an IP message header of this IP message and the TS packet of high visual sensitivity in the IP message into a new IP message (shorter than the original IP message but with the same sequence number); or, discarding the original message header and re-encapsulating a packet header for the TS packet that needs to be transmitted; or, reassembling several consecutive IP messages, whose payloads are less than 7 TS packets after the TS packet of low visual sensitivity is discarded, into a new IP message that carries the media stream, or directly discarding an IP message in which all TS packets have low visual sensitivity. In the latter two circumstances, Real-time Transfer Protocol (RTP) sequence numbers in the reassembled IP message may be inconsecutive. In this case, in order to prevent a retransmission request caused by a packet loss from impacting a network, this example may further include:
S130: Send a retransmission suppression message to the user equipment to instruct the user equipment to refrain from requesting retransmission of an IP message with inconsecutive RTP sequence numbers that are caused in the re-encapsulation process in step S110.

In this example of the present invention, the network device discards the TS packet of low visual sensitivity in the video packets, re-encapsulates the TS packet of high visual sensitivity into a media stream carried in the IP message, and sends the re-encapsulated media stream to the user equipment. In addition, through a retransmission suppression mechanism, the user equipment does not request retransmission of the IP message with inconsecutive RTP sequence numbers that are caused by the re-encapsulation. In this way, the transmission efficiency is improved, and the network bandwidth is saved.

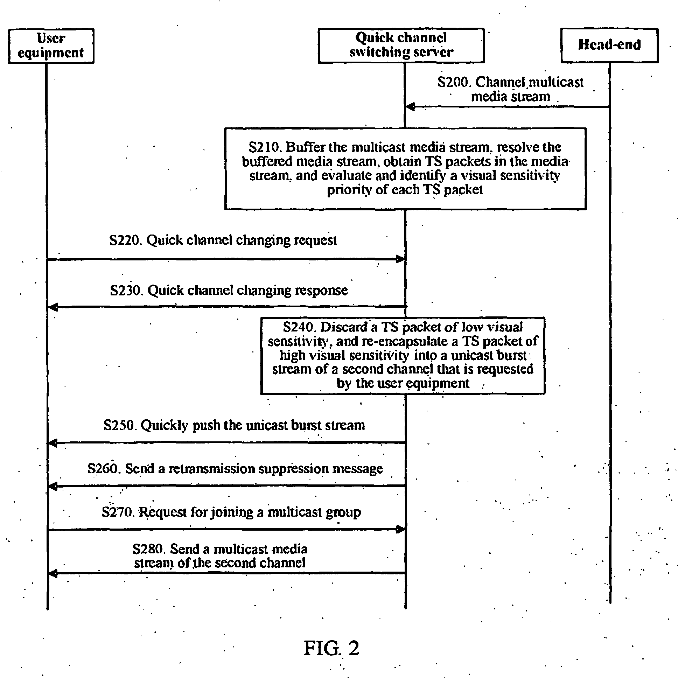

FIG. 2 is a schematic flowchart of a method for forwarding video data according to an embodiment of the present invention. The embodiment is applied in a fast channel change scenario, and includes the following steps:
S200: A head-end sends a channel multicast media stream to a fast channel change server.

As an implementation mode, the head-end may send channel multicast media streams of multiple channels. The channel multicast media stream is carried in an IP message. In this step, it may also be that another network device sends a channel multicast media stream to the fast channel change server.

S210: After receiving the channel multicast media stream, the fast channel change server buffers the corresponding multicast media stream, resolves the buffered media stream, obtains TS packets in the media stream, and evaluates and identifies a visual sensitivity priority of each TS packet.

If channel multicast media streams of multiple channels are received, the fast channel change server needs to separately store the multiple channel multicast media streams to prevent an error from occurring in transmitting a program.

Moreover, in this step, Program Specific Information (PSI) of each channel in the buffered media stream may be identified and stored. The PSI includes a PAT, a PMT, a Conditional Access Table (CAT), a Network Information Table (NIT), and so on.

S220: The fast channel change server receives a fast channel change request sent by the user equipment to request for changing from a first channel to a second channel.

S230: The fast channel change server sends a fast channel change response to the user equipment, and allows the user equipment to perform a fast channel change.

S240: The fast channel change server discards a TS packet of low visual sensitivity in a media stream corresponding to the second channel, and re-encapsulates a TS packet of high visual sensitivity into a new unicast burst stream of the second channel.

Although step S240 is performed after step S220 in this embodiment, the performing order is not limited in a practical application. That is, step S240 may be spontaneously performed by the fast channel change server, or the user equipment may send a fast channel change request to trigger the fast channel change server to perform step S240; or the fast channel change server performs S240 according to a notification or request of adjusting a transmission rate that is sent by the user equipment.

S250: The fast channel change server quickly pushes the unicast burst stream to the user equipment.

In this embodiment of the present invention, when the fast channel change server quickly pushes the unicast burst stream to the user equipment, the push may start from an I frame or an IDR frame (corresponding to the H.264 standard) that can be decoded independently. However, a channel program encapsulated through MPEG2-TS can be demultiplexed and decoded only relying on the PSI. In this case, the PSI of the second channel needs to be pushed before the I frame or the IDR frame is pushed. Certainly, the push may also start from a first PAT packet before the I frame or the IDR frame.

In another embodiment, the PSI of the second channel that is buffered in step S210 may be pushed to the user equipment first in this step, and the push is continued starting from the I frame or the IDR frame that actually needs to be pushed. In this way, the user equipment can immediately decode and display the I frame or the IDR frame after receiving the I frame or the IDR frame, which reduces duration of the fast channel change. The pushed PSI may be a collection of multiple buffered distributed pieces of PSI of the second channel.

If the media stream is carried in the IP message, the re-encapsulating the TS packet of high visual sensitivity into the unicast burst stream in step S240 may be: discarding a TS packet of low visual sensitivity after resolving the IP message, reserving only a TS packet of high visual sensitivity in the IP message, and re-encapsulating an IP message header corresponding to the user equipment for this message; or, reassembling several consecutive IP messages, whose payloads are less than 7 TS packets after the TS packet of low visual sensitivity are discarded, into a new IP message, and re-encapsulating the IP message header corresponding to the user equipment for the new IP message. In the latter circumstance, RTP sequence numbers in the newly assembled IP message may be inconsecutive. In this case, in order to prevent a retransmission request caused by a packet loss from impacting a network, this embodiment may further include:
S260: The fast channel change server sends a retransmission suppression message to the user equipment, where the retransmission suppression message is configured to instruct the user equipment to refrain from requesting retransmission of the IP message with inconsecutive RTP sequence numbers that are caused in the re-encapsulation process in step S240.

S270: The user equipment sends a request for joining a multicast group of the second channel to the fast channel change server. Here, the request may be sent by the user equipment actively, or sent by the user equipment according to notification of the fast channel change server.

S280: When discovering that the unicast burst stream is synchronous to a multicast media stream of the second channel, the fast channel change server stops sending the unicast burst stream, and sends the multicast media stream of the second channel to the user equipment instead.

In this embodiment of the present invention, at the time of a fast channel change, the TS packet of low visual sensitivity is discarded selectively according to a load type of the TS packet, and the TS packet of high visual sensitivity are re-encapsulated into a media stream and sent to the user equipment. In this way, transmission time of the unicast burst stream is reduced at the time of the fast channel change, network congestion is avoided, a changing delay is reduced, and user experience is enhanced.

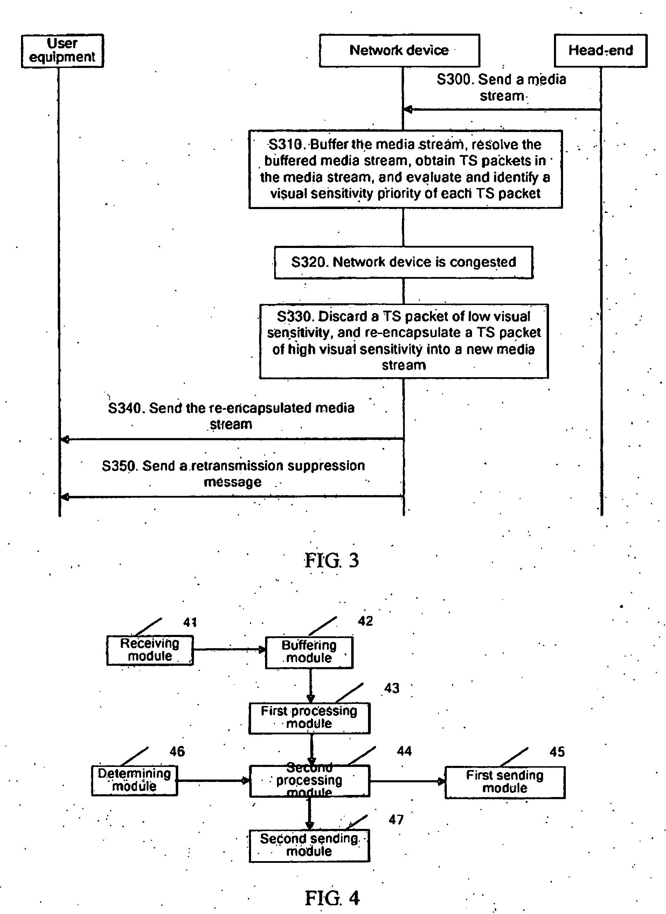

FIG 3 is a schematic flowchart of a method for forwarding video data according to another example of the present invention, which is primarily applied in a scenario where network congestion occurs. The method in this example includes the following steps:
S300: A head-end sends a media stream to a network device.

In this step, it may also be that another network device sends a media stream to the network device, and the sent media stream may correspond to multiple channels or programs. The media stream may be carried in an IP message.

S310: After receiving and buffering the media stream, the network device resolves the buffered media stream, obtains TS packets in the media stream, and evaluates and identifies a visual sensitivity priority of each TS packet.

S320: The network device performs network congestion detection. Step S330 is performed if it is determined that network congestion occurs.

S330: According to the network congestion state, the network device discards a TS packet of low visual sensitivity in the media stream that needs to be sent, and re-encapsulates a TS packet of high visual sensitivity into a new media stream.

S340: The network device sends the re-encapsulated new media stream to the user equipment.

When the media stream is a unicast media stream carried in the IP message, the re-encapsulating the TS packet of high visual sensitivity into a new media stream in step S330 may be: discarding a TS packet of low visual sensitivity after resolving the IP message, and reserving only a TS packet of high visual sensitivity in the IP message; directly forwarding the IP message if all TS packets in the IP message have high visual sensitivity; directly discarding the IP message if all the TS packets in the IP message have low visual sensitivity; or, reassembling several consecutive IP messages, whose payloads are less than 7 TS packets after the TS packet of low visual sensitivity is discarded, into a new IP message. Due to the discarding or the assembling, RTP sequence numbers in the IP message may be inconsecutive. In order to prevent a retransmission request caused by the inconsecutive RTP sequence numbers from impacting a network, in this example may further include the following steps:
S350: The network device sends a retransmission suppression message to the user equipment so that the user equipment refrains from requesting retransmission of the IP message with inconsecutive RTP sequence numbers that are caused in the re-encapsulation process in step S330.

When the media stream is carried in the IP message and the media stream is a multicast media stream, the re-encapsulating the TS packet of high visual sensitivity into a new media stream in step S330 may specifically be: The network device encapsulates the TS packet of high visual sensitivity into a new media stream carried in the IP message, and the message header of the IP message carries corresponding information about the user equipment.

In this example of the present invention, the network device selectively discards, according to the network congestion state, the TS packet of low visual sensitivity in the channel media stream that needs to be sent, re-encapsulates the TS packet of high visual sensitivity into an IP message, and sends the IP message to the user equipment. In addition, through a retransmission suppression message, the user equipment does not request retransmission of the IP message with inconsecutive RTP sequence numbers that are caused by IP message assembling. In this way, data traffic in the network is reduced, and the network congestion is relieved.

In the foregoing embodiments and examples of the present invention, the amount of buffered data of each channel may be set according to the configuration. For example, a media stream capable of playing for 2 or 4 seconds is buffered. The media stream may include audio, a video, and other information that is included in the channel. Moreover, at the time of buffering media streams carried in IP messages, the IP messages need to be sorted according to the RTP sequence numbers to ensure that the IP messages are stored sequentially.

In the foregoing embodiments and examples of the present invention, the retransmission suppression message may be a next IP message that carries retransmission suppression information and needs to be normally sent to the user equipment, or may be an extended RTP message or a Real-time Transfer Control Protocol (RTCP) message.

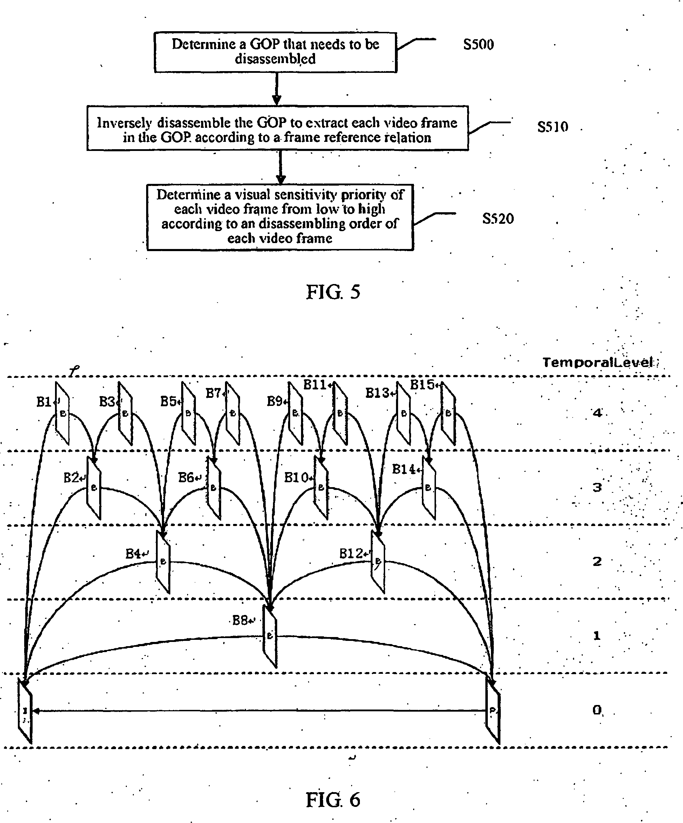

In the foregoing embodiments and examples, after the buffered media stream is resolved and the TS packets in the media stream are obtained, the visual sensitivity priority of each TS packet is evaluated. This may be implemented by using a following method, including:
(1) In the buffered media stream, recognize PSI corresponding to the media stream, and store the PSI.
(2) In the buffered media stream, recognize video TS packets and a non-video TS packets (for example, audio TS packets and a TS packets that encapsulates other control information). Set the visual sensitivity of the non-video TS packets as a high priority so that the non-video TS packets cannot be discarded. For the video TS packets, mark the GOP and the beginning and the end of each frame (that is, a frame border). Specifically, recognize key video information such as a PAT, a PMT, and a frame beginning tag through Deep Packet Inspection (DPI); or identify special information by a video source (that is, the head-end), and recognize the key video information according to the special information at the time of buffering the media stream.
(3) Evaluate the visual sensitivity of each video frame. As shown in FIG. 5, a method for evaluating a visual sensitivity priority of a video frame includes:
   S500: Determine a GOP that needs to be disassembled.

FIG. 6 is a schematic structural diagram of a frame in a GOP according to an embodiment of the present invention. For ease of description about a reference relation between frames, the GOP includes an I frame, a P frame (a forward prediction frame), and 15 B frames (bidirectional interpolation frames). Each B frame is generated as a result of prediction based on a frame prior to the B frame and a frame next to the B frame. For example, in FIG 6, a B8 frame is generated as a result of prediction based on the I frame and the P frame. In a practical application, a GOP may include one I frame and multiple P frames. The B frame may have only one reference level, which, however, does not affect the application scope of the present invention.

In a GOP structure, a temporal level indicates the reference relation between frames. The top temporal level is a non-reference level. No frame on this level is referenced by another frame. For example, in FIG 6, the B frames (including B1, B3, B5, B7, B9, B11, B13, and B15) on temporal level 4 are not referenced by another frame. Because these frames are not referenced by another frame, discarding of such a frame does not affect decoding or display of a remaining video frame sequence. Other levels are reference levels and all frames on these reference levels are referenced by another frame. For example, in FIG. 6, all frames (including I, P, B8, B4, B12, B2, B6, B10, and B14) on temporal level 0, temporal level 1, temporal level 2, and temporal level 3 are referenced by another frame. For example, B 14 may be referenced by B13 and B15, and B10 may be referenced by B9 and B11. Because these frames are referenced by another frame, discarding of such a frame leads to a decoding error, a mosaic picture, and so on. However, if the another frame that references a specific frame is discarded, this specific frame becomes a non-reference frame, and the discarding of this frame does not affect the decoding or display of the remaining video frame sequence.

S510: Inversely disassemble the GOP to extract each video frame in the GOP according to a frame reference relation.

A specific disassembling method may include: (a) disassembling the GOP to extract video frames from the last video frame of a non-reference level to a reference level (from the end to the beginning), that is, starting from B15 in this embodiment; and (b) after completion of extracting all video frames that are generated by referencing a specific video frame, extracting this referenced video frame. In this embodiment, B15 and B13 are generated by referencing B 14, and therefore, B14 is extracted after completion of extracting B15 and Razz After completion of extracting B14, continue to inversely disassembling the GOP to extract the video frames starting from the non-reference level until all video frames in the whole GOP are extracted.

According to this embodiment of the present invention, a disassembling order of each video frame in the GOP shown in FIG. 6 is B15, B13, B14, B11, B9, B10, B12, B7, B5, B6, B3, B1, B2, B4, B8, P, and I.

S520. Determine a visual sensitivity priority of each video frame from low to high according to the disassembling order of each video frame.

If it is set that a video frame extracted first has a low visual sensitivity priority and a video frame extracted later has a high visual sensitivity priority, in this embodiment of the present invention, the visual sensitivity priorities of the video frames shown in FIG . 6 are ranked from low to high as: B15, B13, B14, B11, B9, B10, B12, B7, B5, B6, B3, B1, B2, B4, B8, P, and I.
(4) Evaluate and identify the visual sensitivity priority of each TS packet according to the visual sensitivity priority of each video frame. When a TS packet includes only one video frame, the visual sensitivity priority of the TS packet is the visual sensitivity priority of the video frame; when the TS packet includes multiple video frames, the visual sensitivity priority of the TS packet is the visual sensitivity priority of a video frame that has the highest visual sensitivity priority and is included in the TS packet; when the TS packet includes an internal coding frame, the TS packet is identified as a high priority, and cannot be discarded.

Through the foregoing embodiment of the present invention, the visual sensitivity priority of each TS packet can be evaluated, and then the TS packets that may be discarded are determined according to a channel description feature, a configuration parameter, a network congestion state, a set packet loss ratio, and so on.

An embodiment of the present invention also discloses an apparatus for forwarding video data to implement the methods described in the foregoing embodiments of the present invention. As shown in FIG. 4, the apparatus in this embodiment of the present invention includes:
a receiving module 41, configured to receive a multicast stream sent by a head-end or forwarded by another network device (see steps S100, S200, and S300 for a specific implementation mode);
a buffering module 42, configured to buffer the multicast stream received by the receiving module 41 (see steps S100, S210, and S310); and
a first processing module 43, configured to resolve the media stream buffered by the buffering module 42, obtain TS packets in the media stream, and evaluate and identify a visual sensitivity priority of each TS packet (see steps S100, S210, and S310 for a specific implementation mode);
where the first processing module may further include: a first submodule, configured to distinguish a video TS packet among the TS packets, and evaluate and identify a visual sensitivity priority of the video TS packet; the first submodule specifically includes: a GOP determining module, configured to determine, in the media stream, a GOP that needs to be disassembled according to the video TS packet; a disassembling module, configured to inversely disassemble, according to a frame reference relation, the GOP determined by the GOP determining module to extract each video frame in the GOP; a first priority determining module, configured to determine a visual sensitivity priority of each extracted video frame according to an order of extracting the video frames by the disassembling module; and a second priority determining module, configured to determine a visual sensitivity priority of the video TS, packet that encapsulates a video frame according to the visual sensitivity priority of each video frame determined by the first priority determining module;
a second processing module 44, configured to, according to the evaluation of the first processing module 43, discard a TS packet of low visual sensitivity and re-encapsulate a TS packet of high visual sensitivity into a new media stream (see steps S110, S240, and S330 for a specific implementation mode); and
a first sending module 45, configured to send the new media stream that is re-encapsulated by the second processing module 44 to a user equipment (see steps S120, S250, and S340 for a specific implementation mode).

The apparatus in this embodiment of the present invention may further include a determining module 46, configured to: determine whether network congestion occurs, and, when the network congestion occurs, trigger the second processing module 44 to discard the TS packet of low visual sensitivity and to re-encapsulate the TS packet of high visual sensitivity into a new multicast media stream or unicast media stream.

The receiving module 41 in the apparatus in this embodiment of the present invention is further configured to: receive a fast channel change request sent by the user equipment, and, according to the fast channel change request, trigger the second processing module 44 to discard the TS packet of low visual sensitivity and to re-encapsulate the TS packet of high visual sensitivity into a unicast burst stream corresponding to a channel that is requested by the user.

When the media stream buffered by the buffering module 42 is carried in an IP message, the re-encapsulating, by the second processing module 44, the TS packet of high visual sensitivity into a new media may be: after resolving the IP message, discarding a TS packet of low visual sensitivity and reserving only a TS packet of high visual sensitivity in the IP message; or, reassembling several consecutive IP messages, whose payloads are less than 7 TS packets after the TS packet of low visual sensitivity is discarded, into a new IP message.

In the latter circumstance, RTP sequence numbers in the newly assembled IP message may be inconsecutive. In order to prevent a retransmission request caused by a packet loss from impacting a network, the apparatus in this embodiment may further include:
a second sending module 47, configured to send a retransmission suppression message to the user equipment so that the user equipment refrains from requesting retransmission of the IP message with inconsecutive RTP sequence numbers that are caused in the re-encapsulation process performed by the second processing module (see steps S130, S260, and S350 for a specific implementation mode).

The apparatus for forwarding video data in this embodiment of the present invention may be a fast channel change server or a network device that needs to handle network congestion. If the apparatus for forwarding video data is the fast channel change server, the apparatus may further include a third processing module, configured to resolve the media stream buffered in the buffering module, obtain and store PSI, where the PSI is sent by the first sending module 45 to the user equipment before the unicast burst stream requested by the user equipment in a process of fast channel change.

An embodiment of the present invention also provides a system for forwarding video data. The system includes the apparatus for forwarding video data shown in FIG 4 and a user equipment. The system is configured to implement the methods described in all the foregoing method embodiments and examples of the present invention. See the foregoing method embodiments and examples for a specific implementation mode, and no further description is provided here.

Through implementing the foregoing embodiments and examples of the present invention, the network device is enabled to discard the TS packet of low visual sensitivity in the media stream, which reduces duration of a fast channel change, relieve network congestion, and improves transmission efficiency without affecting the QoE of a user.

Through the description of the foregoing embodiments and examples, those skilled in the art may be clearly aware that the present invention may be implemented through hardware, or through software in addition to a necessary universal hardware platform. Therefore, the technical solutions of the present invention may be embodied in a software product. The software product may be stored in a nonvolatile storage medium, such as a Compact Disk-Read Only Memory (CD-ROM), a Universal Serial Bus (USB) flash disk, and a mobile hard disk, and may incorporate several instructions that enable a computer device (such as a personal computer, a server, or a network device) to execute the methods provided in each embodiment and example of the present invention.

Although the invention is described through some exemplary embodiments and examples, it should be noted that the invention is not limited to such embodiments and examples. It is apparent that those of ordinary skill in the art can make modifications and variations to the invention without departing from the idea and scope of the invention. The invention is intended to cover the modifications and variations provided that they fall within the protection scope defined by the following claims or their equivalents.

## Claims

1. A method for forwarding video data, comprising:
receiving and buffering (S100) at least two media streams corresponding to at least two channels, respectively, which are encapsulated in IP messages according to MPEG-2 TS standard,
resolving the buffered media streams, obtaining Transport Stream, TS, packets in the media streams, and evaluating and identifying a visual sensitivity for each TS packet, wherein all non-video TS packets carrying audio and other control information are stipulated as having a high visual sensitivity and wherein for each video TS packet carrying a video said step comprises determining the visual sensitivity,
wherein evaluating a visual sensitivity of a video TS packet comprises:
determining (S500) a Group of Pictures, GOP, that needs to be disassembled according to each video TS packet; inversely disassembling (S510) the GOP to extract each video frame in the GOP according to a frame reference relation, wherein the inversely disassembling the GOP to extract each video frame in the GOP according to the frame reference relation specifically comprises:
disassembling the GOP to extract the video frames from a last video frame of a non-reference level to a reference level; after completion of extracting all video frames that are generated by referencing a video frame, extracting this referenced video frame; and continuing the disassembly until all video frames in the whole GOP are extracted;
determining (S520), after disassembling is completed, a visual sensitivity of each video frame from low to high according to a disassembling order of each video frame, wherein the disassembling order depends on the frame reference relation of the group of pictures, GOP; and
evaluating and identifying a visual sensitivity of each video TS packet according to a visual sensitivity of each video frame, if a video TS packet comprises only one video frame, the visual sensitivity of the TS packet is the visual sensitivity of the video frame;
if a video TS packet comprises multiple video frames, the visual sensitivity of the TS packet is the visual sensitivity of a video frame which has the highest visual sensitivity among the multiple video frames,
receiving a fast channel change request that is sent by a user equipment for changing from a first channel to a second channel and in reaction thereto
discarding (S110) a TS packet of low visual sensitivity, and re-encapsulating a TS packet of high visual sensitivity into a new media stream corresponding to the second channel; and
sending (S120) IP messages containing the re-encapsulated new media stream to a user equipment,
wherein before the obtaining the TS packets in the media stream, the method further comprises obtaining Program Specific Information, PSI, from the buffered media streams and storing the PSI.

2. The method according to claim 1, wherein the re-encapsulated new media stream is specifically a unicast burst stream, which is carried in an Internet Protocol, IP, message, of the second channel; and
the sending (S120) the re-encapsulated new media stream to the user equipment is specifically sending the unicast burst stream of the second channel to the user equipment.

3. The method according to claim 2, wherein before sending the unicast burst stream of the second channel to the user equipment, the method further comprises: sending the stored PSI of the second channel to the user equipment.

4. The method according to any one of claims 1 - 3, wherein the discarding (S110) the TS packet of low visual sensitivity and re-encapsulating the TS packet of high visual sensitivity into the new media stream specifically comprises:
in TS packets that are obtained after the IP message is resolved, discarding the TS packet of low visual sensitivity and re-encapsulating the TS packet of high visual sensitivity into a new IP message that carries the media stream; or
in TS packets that are obtained after the IP message is resolved, discarding the TS-packet of low visual sensitivity, and reassembling multiple consecutive IP messages, whose payloads are less than 7 TS packets after the TS packet of low visual sensitivity is discarded, into an IP message that carries the media stream.

5. The method according to any one of claims 1 - 4, further comprising:
sending (S130) a retransmission suppression message to the user equipment so that the user equipment refrains from requesting retransmission of an IP message with inconsecutive Real-time Transport Protocol, RTP, sequence numbers that are caused in the re-encapsulation process.

6. An apparatus for forwarding video data, comprising:
a receiving module (41), configured to receive at least two media streams corresponding to at least two channels, respectively, which are encapsulated in IP messages according to MPEG-2 TS standard;
a buffering module (42), configured to buffer the media streams received by the receiving module;
a first processing module (43), configured to resolve the media streams buffered by the buffering module, obtain Transport Stream, TS, packets in the media stream, and evaluate and identify a visual sensitivity of each TS packet,
wherein all non-video TS packets carrying audio and other control information are stipulated as having a high visual sensitivity and wherein for each video TS packet carrying a video the visual sensitivity is determined,; wherein
the first processing module (43) comprises:
a first submodule for evaluating a visual sensitivity of a video TS packet; wherein the first submodule specifically comprises:
a GOP determining module, configured to determine a Group of Pictures, GOP, that needs to be disassembled in the media streams according to each video TS packet;
a disassembling module, configured to inversely disassemble, according to a frame reference relation, the GOP determined by the GOP determining module to obtain each video frame in the GOP, wherein the inversely disassembling the GOP to extract each video frame in the GOP according to the frame reference relation specifically comprises:
disassembling the GOP to extract the video frames from a last video frame of a non-reference level to a reference level; after completion of extracting all video frames that are generated by referencing a video frame, extracting this referenced video frame; and continuing the disassembly until all video frames in the whole GOP are extracted;
a first priority determining module, configured to determine, after disassembling is completed, a visual sensitivity of each extracted video frame according to an order of extracting the video frames by the disassembling module; and
a second priority determining module, configured to determine a visual sensitivity of a TS packet that encapsulates a video frame according to the visual sensitivity of each video frame determined by the first priority determining module, wherein the determining the visual sensitivity of the video TS packet comprises:
if a video TS packet comprises only one video frame, the visual sensitivity of the TS packet is the visual sensitivity of the video frame;
if a video TS packet comprises multiple video frames, the visual sensitivity of the TS packet is the visual sensitivity of a video frame which has the highest visual sensitivity among the multiple video frames;
a second processing module (44), configured to, according to the evaluation of the first processing module, discard a TS packet of low visual sensitivity and re-encapsulate a TS packet of high visual sensitivity into a new media stream; and
a first sending module (45), configured to send IP messages containing the re-encapsulated new media stream by the second processing module to a user equipment, further comprising:
a third processing module, configured to resolve the media stream buffered by the buffering module, and obtain and store Program Specific Information, PSI, wherein:
the receiving module (41) is further configured to: receive a fast channel change request sent by the user equipment, and, according to the fast channel change request, trigger the second processing module to discard the TS packet of low visual sensitivity corresponding to a channel that is requested by the user equipment and re-encapsulate the TS packet of high visual sensitivity into a unicast burst stream corresponding to the channel that is requested by the user equipment; and
the sending module (45) is specifically configured to send the PSI to the user equipment before the unicast burst stream.

7. The apparatus according to claim 6, further comprising:
a second sending module (47), configured to send a retransmission suppression message to the user equipment so that the user equipment refrains from requesting retransmission of an IP message with inconsecutive Real-time Transport Protocol, RTP, sequence numbers that are caused in the re-encapsulation process performed by the second processing module.

8. A system for forwarding video data, comprising the apparatus described in any one of claims 6 - 7.

## Patentansprüche

1. Verfahren zum Weiterleiten von Videodaten, das Folgendes umfasst:
Empfangen und Puffern (S100) von wenigstens zwei Medienströmen, die jeweils wenigstens zwei Kanälen entsprechen, die in IP-Nachrichten gemäß dem MPEG-2-TS-Standard eingekapselt sind,
Auflösen der gepufferten Medienströme, Erhalten von Transportstrompaketen, TS-Paketen, in den Medienströmen und Auswerten und Identifizieren einer visuellen Empfindlichkeit für jedes TS-Paket, wobei alle Nicht-Video-TS-Pakete, die Audio- und andere Steuerinformationen führen, als eine hohe visuelle Empfindlichkeit aufweisend festgelegt werden, und wobei für jedes Video-TS-Paket, das ein Video führt, der Schritt das Bestimmen der visuellen Empfindlichkeit umfasst;
wobei
das Auswerten der visuellen Empfindlichkeit eines Video-TS-Pakets Folgendes umfasst: Bestimmen (S500) einer Gruppe von Bildern, GOP, die zerlegt werden muss, gemäß jedem Video-TS-Paket; inverses Zerlegen (S510) der GOP gemäß einer Rahmenbezugsbeziehung, um jeden Videorahmen in der GOP zu extrahieren, wobei das inverse Zerlegen gemäß der Rahmenbezugsbeziehung der GOP, um jeden Videorahmen in der GOP zu extrahieren, spezifisch Folgendes umfasst:
Zerlegen der GOP, um die Videorahmen von einem letzten Videorahmen von einer Nicht-Bezugsebene bis zu einer Bezugsebene zu extrahieren; nach dem Abschluss des Extrahierens aller Videorahmen, die unter Bezugnahme auf einen Videorahmen erzeugt werden, Extrahieren dieses Videorahmens, auf den Bezug genommen worden ist; und Fortsetzen des Zerlegens, bis alle Videorahmen in der ganzen GOP extrahiert sind;
Bestimmen (S520), nachdem das Zerlegen abgeschlossen ist, einer visuellen Empfindlichkeit jedes Videorahmens von niedrig bis hoch gemäß der Reihenfolge des Zerlegens jedes Videorahmens, wobei die Reihenfolge des Zerlegens von der Rahmenbezugsbeziehung der Gruppe von Bildern, GOP, abhängt; und
Auswerten und Identifizieren einer visuellen Empfindlichkeit jedes Video-TS-Pakets gemäß einer visuellen Empfindlichkeit jedes Videorahmens, wobei, falls ein Video-TS-Paket nur einen Videorahmen umfasst, die visuelle Empfindlichkeit des TS-Pakets die visuelle Empfindlichkeit des Videorahmens ist;
falls ein Video-TS-Paket mehrere Videorahmen umfasst, die visuelle Empfindlichkeit des TS-Pakets die visuelle Empfindlichkeit eines Videorahmens, der die höchste visuelle Empfindlichkeit unter den mehreren Videorahmen aufweist, ist, Empfangen einer Anforderung für einen schnellen Kanalwechsel, die von einem Anwendergerät gesendet wird, zum Wechseln von einem ersten Kanal zu einem zweiten Kanal, und in Reaktion darauf
Verwerfen (S110) eines TS-Pakets mit niedriger visueller Empfindlichkeit und erneutes Einkapseln eines TS-Pakets mit hoher visueller Empfindlichkeit in einen neuen Medienstrom entsprechend dem zweiten Kanal; und
Senden (S120) von IP-Nachrichten, die den erneut eingekapselten neuen Medienstrom enthalten, an ein Anwendergerät,
wobei vor dem Erhalten der TS-Pakete in dem Medienstrom das Verfahren ferner das Erhalten programmspezifischer Informationen, PSI, von den gepufferten Medienströmen und das Speichern der PSI umfasst.

2. Verfahren nach Anspruch 1, wobei der erneut eingekapselte neue Medienstrom spezifisch ein "Unicast Burst"-Strom ist, der in einer Internetprotokoll-Nachricht, IP-Nachricht, des zweiten Kanals geführt wird; und
das Senden (S120) des erneut eingekapselten neuen Medienstroms an das Anwendergerät spezifisch das Senden des "Unicast Burst"-Stroms des zweiten Kanals an das Anwendergerät ist.

3. Verfahren nach Anspruch 2, wobei vor dem Senden des "Unicast Burst"-Stroms des zweiten Kanals an das Anwendergerät das Verfahren ferner Folgendes umfasst: Senden der gespeicherten PSI des zweiten Kanals an das Anwendergerät.

4. Verfahren nach einem der Ansprüche 1-3, wobei das Verwerfen (S110) des TS-Pakets mit niedriger visueller Empfindlichkeit und das erneute Einkapseln des TS-Pakets mit hoher visueller Empfindlichkeit in den neuen Medienstrom spezifisch Folgendes umfasst:
in den TS-Paketen, die erhalten werden, nachdem die IP-Nachricht aufgelöst worden ist, Verwerfen des TS-Pakets mit niedriger visueller Empfindlichkeit und erneutes Einkapseln des TS-Pakets mit hoher visueller Empfindlichkeit in eine neue IP-Nachricht, die den Medienstrom führt; oder
in den TS-Paketen, die erhalten werden, nachdem die IP-Nachricht aufgelöst worden ist, Verwerfen des TS-Pakets mit niedriger visueller Empfindlichkeit und erneutes Zusammensetzen mehrerer aufeinanderfolgender IP-Nachrichten, deren Nutzinformationen weniger als 7 TS-Pakete sind, nachdem das TS-Paket mit niedriger visueller Empfindlichkeit verworfen worden ist, in eine IP-Nachricht, die den Medienstrom führt.

5. Verfahren nach einem der Ansprüche 1-4, das ferner Folgendes umfasst:
Senden (S130) einer Nachricht zum Unterdrücken der erneuten Sendung an das Anwendergerät, so dass das Anwendergerät es unterlässt, die erneute Sendung einer IP-Nachricht mit nicht aufeinanderfolgenden laufenden Nummern des Echtzeit-Transportprotokolls, RTP, anzufordern, die in dem Prozess der erneuten Einkapselung verursacht werden.

6. Vorrichtung zum Weiterleiten von Videodaten, die Folgendes umfasst:
ein Empfangsmodul (41), das konfiguriert ist, wenigstens zwei Medienströme, die jeweils wenigstens zwei Kanälen entsprechen, die in IP-Nachrichten gemäß dem MPEG-2-TS-Standard eingekapselt sind, zu empfangen;
ein Pufferungsmodul (42), das konfiguriert ist, die durch das Empfangsmodul empfangenen Medienströme zu puffern;
ein erstes Verarbeitungsmodul (43), das konfiguriert ist, die durch das Pufferungsmodul gepufferten Medienströme aufzulösen, die Transportstrompakete, TS-Pakete, in den Medienströmen zu erhalten und eine visuelle Empfindlichkeit jedes TS-Pakets auszuwerten und zu identifizieren,
wobei alle Nicht-Video-TS-Pakete, die Audio- und andere Steuerinformationen führen, als eine hohe visuelle Empfindlichkeit aufweisend festgelegt werden, und wobei für jedes Video-TS-Paket, das ein Video führt, die visuelle Empfindlichkeit bestimmt wird; wobei
das erste Verarbeitungsmodul (43) Folgendes umfasst:
ein erstes Untermodul zum Auswerten einer visuellen Empfindlichkeit eines Video-TS-Pakets, wobei das erste Untermodul spezifisch Folgendes umfasst:
ein GOP-Bestimmungsmodul, das konfiguriert ist, eine Gruppe von Bildern, GOP, die zerlegt werden muss, in den Medienströmen gemäß jedem Video-TS-Paket zu bestimmen;
ein Zerlegungsmodul, das konfiguriert ist, die durch das GOP-Bestimmungsmodul bestimmte GOP gemäß einer Rahmenbezugsbeziehung invers zu zerlegen, um jeden Videorahmen in der GOP zu erhalten, wobei das inverse Zerlegen der GOP, um jeden Videorahmen in der GOP zu extrahieren, gemäß der Rahmenbezugsbeziehung spezifisch Folgendes umfasst:
Zerlegen der GOP, um die Videorahmen von wenigstens einem letzten Videorahmen von einer Nicht-Bezugsebene bis zu einer Bezugsebene zu extrahieren; nach dem Abschluss des Extrahierens aller Videorahmen, die unter Bezugnahme auf einen Videorahmen erzeugt werden, Extrahieren dieses Videorahmens, auf den Bezug genommen worden ist; und Fortsetzen des Zerlegens, bis alle Videorahmen in der ganzen GOP extrahiert sind;
ein erstes Prioritätsbestimmungsmodul, das konfiguriert ist, eine visuelle Empfindlichkeit jedes extrahierten Videorahmens gemäß einer Reihenfolge des Extrahierens der Videorahmen durch das Zerlegungsmodul zu bestimmen, nachdem das Zerlegen abgeschlossen ist; und
ein zweites Prioritätsbestimmungsmodul, das konfiguriert ist, eine visuelle Empfindlichkeit eines TS-Pakets, das einen Videorahmen einkapselt, gemäß der durch das erste Prioritätsbestimmungsmodul bestimmten visuellen Empfindlichkeit jedes Videorahmens zu bestimmen, wobei das Bestimmen der visuellen Empfindlichkeit des Video-TS-Pakets Folgendes umfasst:
falls ein Video-TS-Paket nur einen Videorahmen umfasst, ist die visuelle Empfindlichkeit des TS-Paket die visuelle Empfindlichkeit des Videorahmens;
falls ein Video-TS-Paket mehrere Videorahmen umfasst, ist die visuelle Empfindlichkeit des TS-Pakets die visuelle Empfindlichkeit eines Videorahmens, der die höchste visuelle Empfindlichkeit unter den mehreren Videorahmen aufweist;
ein zweites Verarbeitungsmodul (44), das konfiguriert ist, gemäß der Auswertung des ersten Verarbeitungsmoduls ein TS-Paket mit niedriger visueller Empfindlichkeit zu verwerfen und ein TS-Paket mit hoher visueller Empfindlichkeit in einen neuen Medienstrom einzukapseln; und
ein erstes Sendemodul (45), das konfiguriert ist, die IP-Nachrichten, die den durch das zweite Verarbeitungsmodul erneut eingekapselten neuen Medienstrom enthalten, an ein Anwendergerät zu senden, und ferner Folgendes umfasst:
ein drittes Verarbeitungsmodul, das konfiguriert ist, den durch das Pufferungsmodul gepufferten Medienstrom aufzulösen und programmspezifische Informationen, PSI, zu erhalten und zu speichern, wobei:
das Empfangsmodul (41) ferner konfiguriert ist: eine Anforderung für einen schnellen Kanalwechsel, die von einem Anwendergerät gesendet wird, zu empfangen, und gemäß der Anforderung für einen schnellen Kanalwechsel das zweite Verarbeitungsmodul auszulösen, um das TS-Paket mit niedriger visueller Empfindlichkeit, das einem Kanal entspricht, der durch das Anwendergerät angefordert worden ist, zu verwerfen und das TS-Paket mit hoher visueller Empfindlichkeit in einen "Unicast Burst"-Strom, der dem Kanal entspricht, der durch das Anwendergerät angefordert worden ist, erneut einzukapseln; und
das Sendemodul (45) spezifisch konfiguriert ist, die PSI vor dem "Unicast Burst"-Strom an das Anwendergerät zu senden.

7. Vorrichtung nach Anspruch 6, die ferner Folgendes umfasst:
ein zweites Sendemodul (47), das konfiguriert ist, eine Nachricht zum Unterdrücken der erneuten Sendung an das Anwendergerät zu senden, so dass das Anwendergerät es unterlässt, die erneute Sendung einer IP-Nachricht mit nicht aufeinanderfolgenden laufenden Nummern des Echtzeit-Transportprotokolls, RTP, anzufordern, die in dem durch das zweite Verarbeitungsmodul ausgeführten Prozess der erneuten Einkapselung verursacht werden.

8. System zum Weiterleiten von Videodaten, das die Vorrichtung nach einem der Ansprüche 6-7 umfasst.

## Revendications

1. Procédé de transmission de données vidéo, comprenant les étapes suivantes :
recevoir et mettre en mémoire tampon (S 100) au moins deux flux multimédia correspondant à au moins deux canaux, respectivement, qui sont encapsulés dans des messages IP selon la norme MPEG-2 TS,
résoudre les flux multimédia mis en mémoire tampon, obtenir des paquets de flux de transport, TS, dans les flux multimédia, et évaluer et identifier une sensibilité visuelle pour chaque paquet TS, tous les paquets TS non vidéo contenant des données audio et d'autres informations de commande étant stipulés comme ayant une haute sensibilité visuelle et, pour chaque paquet TS vidéo contenant une vidéo, ladite étape consistant à déterminer la sensibilité visuelle ;
l'étape consistant à évaluer une sensibilité visuelle d'un paquet TS vidéo comprenant :
déterminer (S500) un groupe d'images, GOP, qui doit être désassemblé selon chaque paquet TS vidéo; désassembler inversement (S510) le GOP pour extraire chaque trame vidéo dans le GOP selon une relation de référence de trame, l'étape consistant à désassembler inversement le GOP pour extraire chaque trame vidéo dans le GOP selon la relation de référence de trame comprenant spécifiquement :
désassembler le GOP pour extraire les trames vidéo depuis une dernière trame vidéo d'un niveau de non référence jusqu'à un niveau de référence ; une fois terminée l'extraction de toutes les trames vidéo qui sont générées en référençant une trame vidéo, extraire cette trame vidéo référencée ; et continuer le désassemblage jusqu'à ce que toutes les trames vidéo dans le GOP entier aient été extraites ;
déterminer (S520), une fois le désassemblage terminé, une sensibilité visuelle de chaque trame vidéo allant de basse à élevée selon un ordre de désassemblage de chaque trame vidéo, l'ordre de désassemblage dépendant de la relation de référence de trame du groupe d'images, GOP ; et
évaluer et identifier une sensibilité visuelle de chaque paquet TS vidéo selon une sensibilité visuelle de chaque trame vidéo, si un paquet TS vidéo ne comprend qu'une seule trame vidéo, la sensibilité visuelle du paquet TS est la sensibilité visuelle de la trame vidéo ;
si un paquet TS vidéo comprend plusieurs trames vidéo, la sensibilité visuelle du paquet TS est la sensibilité visuelle d'une trame vidéo qui a la sensibilité visuelle la plus élevée parmi les multiples trames vidéo ;
recevoir une requête de changement rapide de canal qui est envoyée par un équipement utilisateur pour un changement depuis un premier canal vers un deuxième canal, et en réaction à celle-ci
rejeter (S110) un paquet TS d'une sensibilité visuelle peu élevée, et ré-encapsuler un paquet TS d'une sensibilité visuelle élevée dans un nouveau flux multimédia correspondant au deuxième canal ; et
envoyer (S120) des messages IP contenant le nouveau flux multimédia ré-encapsulé à un équipement utilisateur,
avant l'étape consistant à obtenir les paquets TS dans le flux multimédia, le procédé comprenant en outre : obtenir des informations spécifiques au programme, PSI, à partir des flux multimédia mis en mémoire tampon et stocker le PSI.

2. Procédé selon la revendication 1, dans lequel le nouveau flux multimédia ré-encapsulé est spécifiquement un flux en rafales de diffusion individuelle, qui est contenu dans un message IP, protocole Internet, du deuxième canal ; et
l'étape consistant à envoyer (S 120) le nouveau flux multimédia ré-encapsulé à l'équipement utilisateur est spécifiquement : envoyer le flux en rafales de diffusion individuelle du deuxième canal à l'équipement utilisateur.

3. Procédé selon la revendication 2, dans lequel, avant d'envoyer le flux en rafales de diffusion individuelle du deuxième canal à l'équipement utilisateur, le procédé comprend en outre : envoyer le PSI stocké du deuxième canal à l'équipement utilisateur.

4. Procédé selon l'une quelconque des revendications 1 à 3, dans lequel l'étape consistant à rejeter (S110) le paquet TS de sensibilité visuelle peu élevée et à ré-encapsuler le paquet TS de sensibilité visuelle élevée dans le nouveau flux multimédia comprend spécifiquement :
dans les paquets TS qui sont obtenus après que le message IP a été résolu, rejeter le paquet TS de sensibilité visuelle peu élevée et ré-encapsuler le paquet TS de sensibilité visuelle élevée dans un nouveau message IP qui contient le flux multimédia ; ou
dans les paquets TS qui sont obtenus après que le message IP a été résolu, rejeter le paquet TS de faible sensibilité visuelle, et réassembler plusieurs messages IP consécutifs, dont les données utiles sont inférieures à 7 paquets TS après que le paquet TS de faible sensibilité visuelle a été rejeté, dans un message IP qui contient le flux multimédia.

5. Procédé selon l'une quelconque des revendications 1 à 4, comprenant en outre les étapes suivantes :
envoyer (S130) un message de suppression de retransmission à l'équipement utilisateur afin que l'équipement utilisateur s'abstienne de demander une retransmission d'un message IP avec des numéros de séquence de protocole de transport en temps réel, RTP, non consécutifs qui sont produits dans le processus de ré-encapsulation.

6. Appareil de transmission de données vidéo, comprenant :
un module de réception (41), configuré pour recevoir au moins deux flux multimédia correspondant à au moins deux canaux, respectivement, qui sont encapsulés dans des messages IP selon la norme MPEG-2 TS ;
un module de mise en mémoire tampon (42), configuré pour mettre en mémoire tampon les flux multimédia reçus par le module de réception ;
un premier module de traitement (43), configuré pour résoudre les flux multimédia mis en mémoire tampon par le module de mise en mémoire tampon, obtenir des paquets de flux de transport, TS, dans le flux multimédia, et évaluer et identifier une sensibilité visuelle de chaque paquet TS,
tous les paquets TS non vidéo contenant des données audio et d'autres informations de commande étant stipulés comme ayant une haute sensibilité visuelle et, pour chaque paquet TS vidéo contenant une vidéo, la sensibilité visuelle étant déterminée;
le premier module de traitement (43) comprenant :
un premier sous-module destiné à évaluer une sensibilité visuelle d'un paquet TS vidéo ; le premier sous-module comprenant spécifiquement :
un module de détermination de GOP, configuré pour déterminer un groupe d'images, GOP, qui doit être désassemblé dans les flux multimédia selon chaque paquet TS vidéo ;
un module de désassemblage, configuré pour désassembler inversement, selon une relation de référence de trame, le GOP déterminé par le module de détermination GOP pour obtenir chaque trame vidéo dans le GOP, l'étape consistant à désassembler inversement le GOP pour extraire chaque trame vidéo dans le GOP selon la relation de référence de trame comprenant spécifiquement :
désassembler le GOP pour extraire les trames vidéo depuis une dernière trame vidéo d'un niveau de non référence jusqu'à un niveau de référence ; une fois terminée l'extraction de toutes les trames vidéo qui sont générées en référençant une trame vidéo, extraire cette trame vidéo référencée ; et continuer le désassemblage jusqu'à ce que toutes les trames vidéo dans le GOP entier aient été extraites ;
un premier module de détermination de priorité, configuré pour déterminer, une fois le désassemblage terminé, une sensibilité visuelle de chaque trame vidéo extraite selon un ordre d'extraction des trames vidéo par le module de désassemblage; et
un deuxième module de détermination de priorité, configuré pour déterminer une sensibilité visuelle d'un paquet TS qui encapsule une trame vidéo selon la sensibilité visuelle de chaque trame vidéo déterminée par le premier module de détermination de priorité, l'étape consistant à déterminer la sensibilité visuelle du paquet TS vidéo comprenant :
si un paquet TS vidéo ne comprend qu'une seule trame vidéo, la sensibilité visuelle du paquet TS est la sensibilité visuelle de la trame vidéo ;
si un paquet TS vidéo comprend plusieurs trames vidéo, la sensibilité visuelle du paquet TS est la sensibilité visuelle d'une trame vidéo qui a la sensibilité visuelle la plus élevée parmi les multiples trames vidéo ;
un deuxième module de traitement (44), configuré pour rejeter, selon l'évaluation du premier module de traitement, un paquet TS de faible sensibilité visuelle et ré-encapsuler un paquet TS de haute sensibilité visuelle dans un nouveau flux multimédia ; et
un premier module d'envoi (45), configuré pour envoyer des messages IP contenant le nouveau flux multimédia ré-encapsulé par le deuxième module de traitement à un équipement utilisateur, comprenant en outre :
un troisième module de traitement, configuré pour résoudre le flux multimédia mis en mémoire tampon par le module de mise en mémoire tampon, et obtenir et stocker des informations spécifiques au programme, PSI :
le module de réception (41) étant en outre configuré pour : recevoir une requête de changement rapide de canal envoyée par l'équipement utilisateur et, selon la requête de changement rapide de canal, déclencher le deuxième module de traitement pour rejeter le paquet TS de faible sensibilité visuelle correspondant à un canal qui est demandé par l'équipement utilisateur et ré-encapsuler le paquet TS de haute sensibilité visuelle dans un flux en rafales de diffusion individuelle correspondant au canal qui est demandé par l'équipement utilisateur ; et
le module d'envoi (45) étant spécifiquement configuré pour envoyer les PSI à l'équipement utilisateur avant le flux en rafales de diffusion individuelle.

7. Appareil selon la revendication 6, comprenant en outre :
un deuxième module d'envoi (47), configuré pour envoyer un message de suppression de retransmission à l'équipement utilisateur afin que l'équipement utilisateur s'abstienne de demander une retransmission d'un message IP avec des numéros de séquence de protocole de transport en temps réel, RTP, non consécutifs qui sont produits dans le processus de ré-encapsulation exécuté par le deuxième module de traitement.

8. Système de transmission de données vidéo, comprenant l'appareil décrit dans l'une quelconque des revendications 6 à 7.
